# FASCICULE DE BREVET EUROPEEN

(11) **EP 0 468 896 B1**
(45) Date de publication et mention de la délivrance du brevet: **31.01.1996**
(21) Numéro de dépôt: 91420225.4
(22) Date de dépôt: 04.07.1991
(51) Int. Cl.: B01J 19/12, G01N 1/28

(54) **Procédé pour réaliser une réaction chimique par voie humide sur une succession d'échantillons, appareil pour la mise en oeuvre du procédé et utilisation dudit appareil**
Verfahren zur Ausführung einer nasschemischen Reaktion an einer Reihe von Proben, Vorrichtung zum Durchführen des Verfahrens und ihre Anwendung
Method for performing a wet chemical reaction on successive samples, apparatus for carrying out the method and use thereof

(30) Priorité: 24.07.1990 FR 9009663
(43) Date de publication de la demande: 29.01.1992
(73) Titulaire: SOCIETE PROLABO, F-94120 Fontenay-sous-Bois (FR)
(72) Inventeur: Di Martino, Jean-Louis, F-45250 Briare (FR); Millet, Jean-Louis, F-94320 Thiais (FR); Paturat, Jacques, F-45250 Briare (FR); Jacquault, Patrick, F-92310 Sevrès (FR)
(74) Mandataire: Ahner, Francis

(56) Documents cités:
- EP-A- 0 156 742
- EP-A- 0 275 826
- WO-A-90/03840
- FR-A- 2 281 159
- US-A- 3 449 082
- US-A- 4 795 713

## Description

La présente invention concerne un procédé pour réaliser une réaction chimique par voie humide sur une succession d'échantillons, le procédé mettant en oeuvre un chauffage par micro-ondes de l'échantillon dans lequel a été introduit au moins un réactif. Elle concerne également une installation pour réaliser une réaction chimique par voie humide sur une succession d'échantillons qui met en oeuvre le procédé objet de l'invention. Fait également partie de l'invention, l'utilisation de l'installation par exemple pour la minéralisation d'échantillons.

On a déjà décrit notamment dans le brevet européen délivré sous le EP-A-156 742 un appareil et un procédé destinés à réaliser une réaction chimique par voie humide sur une série d'échantillons, les échantillons étant préalablement préparés et introduits dans des matras placés dans les logements d'un carroussel, les matras étant ensuite amenés dans la cavité d'application des micro-ondes d'un générateur de micro-ondes. Cet appareil est commercialisé par la Société PROLABO sous la référence MICRODIGEST 300. Un tel appareil convient généralement bien mais peut difficilement être adapté pour recevoir des échantillons directement d'une ligne d'échantillonnage ainsi qu'à être couplé directement à un appareil d'analyse en continu.

En outre, on connait du document WO-A-90 03840 un dispositif comprenant un circuit ouvert pour réaliser des réactions de synthèse de produit, dans lequel on contrôle uniquement la cinétique de la réaction, par vérification de la pression, de la température et de la vitesse d'alimentation en produit. Ce contrôle de la cinétique permet seulement d'éviter un emballement de la réaction de synthèse, telle qu'une surchauffe ou encore une surppression, mais ne donne aucune information sur l'état d'avancement de la réaction en elle-même.

Enfin, on connaît du document FR-A-2 281 159 un dispositif pour réaliser des réactions chimiques qui comprend un circuit bouclé muni d'une section de réaction sous micro-ondes pour l'application de l'énergie micro-ondes, en aval de cette section de conduits d'alimentation en fluide et d'un conduit d'alimentation en matière particulaire de contact, en amont de ladite section d'une sortie des produits de la réaction et d'une pompe de circulation du milieu fluide et de la matière particulaire dans le circuit bouclé.

Dans ce dispositif, il n'est prévu aucun moyen de contrôle, les quantités de produits, les températures, et les temps de réaction étant prédéterminés. Selon le procédé d'utilisation de ce dispositif aucune adaptation n'est envisagée au cours de la réaction.

On a parfois besoin de pouvoir réaliser des réactions chimiques par voie humide sur des échantillons provenant directement de lignes d'échantillonnage, et notamment en vue de contrôler en continu l'avancement de ces réactions chimiques.

Un but de l'invention est un procédé et une installation pour réaliser une réaction chimique par voie humide qui peut être placé directement entre une ligne d'échantillonnage, alimentant une succession d'échantillons, et, soit un collecteur des produits des réactions chimiques des divers échantillons, soit directement un système d'analyse des divers produits des réactions chimiques.

Ainsi, dans le présent texte l'expression "une succession d'échantillons" ne désigne pas un ensemble d'échantillons individuels préalablement préparés avant d'être placés en situation de subir une réaction chimique, mais des échantillons prélevés à intervalles réguliers ou non par une ligne d'échantillonnage et introduits directement dans l'appareil, c'est-à-dire sans préparation préalable hormis la prédétermination de la quantité d'échantillon traitée. La quantité d'échantillon prédéterminée est définie soit par son volume, soit par sa masse.

Il a maintenant été trouvé un procédé pour réaliser une réaction chimique par voie humide sur une succession d'échantillons ledit procédé mettant en oeuvre un chauffage par micro-ondes dans un circuit bouclé comportant une chambre de réaction placée dans une cavité d'application des micro-ondes, comprenant les étapes consistant à :
a) alimenter une quantité prédéterminée d'échantillon dans le circuit bouclé,
b) faire circuler l'échantillon dans le circuit bouclé,
c) introduire au moins un réactif dans le circuit bouclé,
d) chauffer la chambre de réaction par application de micro-ondes pendant un temps prédéterminé,
e) refroidir le produit de la réaction,
f) contrôler l'avancement de la réaction,
g) récupérer le produit de la réaction,
h) alimenter du liquide de rinçage et rincer le circuit bouclé,
i) en fonction du résultat obtenu à l'étape f), on répète certaines des opérations a) à f).

Dans certains cas, il peut être souhaitable de réaliser une réaction chimique par voie humide sur un produit connu, pour cela, on effectue les opérations a) à i) ci-avant en remplaçant l'échantillon par le produit connu que nous appellerons "étalon".

On peut bien sûr effectuer plusieurs fois les opérations a) à i) avec divers étalons.

Généralement plusieurs réactifs sont introduits dans le circuit bouclé, ces réactifs peuvent être introduits en une seule fois. De préférence les réactifs sont introduits en plusieurs fois, après chaque introduction de réactif on chauffe la chambre de réaction par microondes pendant un temps prédéterminé. Avantageusement, les réactifs sont introduits individuellement dans le circuit bouclé, ainsi entre les opérations b) et g) on répète les opérations c) à d).

Selon un mode de mise en oeuvre du procédé on peut, comme ci-avant, répéter les opérations a) à i) en remplaçant l'échantillon par un étalon. Bien sûr les opérations a) à i) peuvent être effectuées successivement avec des étalons différents.

Par ailleurs, il a également été trouvé, et c'est un autre objet de l'invention, une installation de mise en oeuvre du procédé précité, pour réaliser une réaction chimique par voie humide en particulier sur une succession d'échantillons, mettant en oeuvre un chauffage par microondes, comportant une chambre de réaction placée dans une cavité d'application de micro-ondes, l'ensemble étant disposé dans un circuit bouclé lui-même équipé de moyens d'introduction de réactifs et/ou d'échantillons et des moyens d'alimentation de liquide de rinçage, ledit circuit bouclé comprenant en aval de la chambre de réaction un refroidisseur, une dérivation montée entre l'entrée et la sortie du refroidisseur et des moyens de contrôle de l'avancement de la réaction chimique placés en aval du refroidisseur, le circuit bouclé comprenant en outre un vase d'expansion constitué par un récipient pourvu d'un couvercle étanche et muni d'un évent et d'un conduit de prélévement du produit de la réaction.

Un tel circuit bouclé permit de chauffer la chambre de réaction après chaque introduction de réactif, le vase d'expansion permettant l'augmentation de volume du liquide contenu dans le circuit, augmentation due à l'introduction des réactifs dans le circuit.

Dans le circuit bouclé tout produit, tel qu'échantillon, réactif, étalon, liquide de rinçage, destiné, pendant la mise en oeuvre du procédé, à traverser la chambre de réaction est dit être introduit dans le circuit bouclé en amont de la chambre de réaction. Ainsi, le produit de la réaction sort du circuit en aval de la chambre de réaction car il ne traverse plus la chambre de réaction.

Les micro-ondes sont produites par un générateur de mico-ondes de tout type connu auquel est associée une cavité d'application dans laquelle est placée la chambre de réaction.

Comme cavité d'application des micro-ondes on peut utiliser celles des appareils commercialisés par la Société PROLABO sous le nom de MICRODIGEST 300 et de MAXIDIGEST MX 350.

La forme de la chambre de réaction n'est pas critique, une chambre de réaction tubulaire convient particulièrement bien.

Advantageusement, conformément à l'invention, la dérivation comporte à chacune de ses extrémités une vanne permettant de l'isoler du circuit bouclé, l'ouverture et la fermeture desdites vannes étant commandables en réponse aux informations données par les moyens de contrôle de l'avancement de la réaction chimique.

Il convient de préciser que selon le procédé conforme à l'invention en fonction des informations fournies par les moyens de contrôle de l'avancement de la réaction à l'étape f), on ajuste les paramètres de la réaction chimique.

On peut augmenter la durée du chauffage du produit dans la chambre de réaction et, établissant une recirculation du produit dans le circuit bouclé après chaque injection de réactif et en shuntant le refroidisseur en faisant circuler le produit dans la dérivation.

Selon un mode de réalisation, de l'installation selon l'invention les moyens d'introduction de réactifs et/ou d'échantillons comprennent un conduit d'alimentation d'échantillons, au moins un conduit d'introduction d'un réactif et les moyens d'alimentation en liquide de rinçage sont constitués par un un conduit d'alimentation de liquide de rinçage, chaque conduit étant raccordé au circuit bouclé par une vanne permettant de l'isoler dudit circuit bouclé, et il est prévu des moyens de commandes de l'ouverture et de la fermeture desdites vannes.

Il est bien entendu que l'ordre d'énumération des divers conduits ne présume en rien de leurs positions respectives, cela signifie seulement que l'échantillon, le réactif et le liquide de rinçage sont introduits dans le circuit en amont de la chambre de réaction.

Ces conduits, chacun étant muni d'une vanne, peuvent déboucher individuellement dans le circuit, ils peuvent aussi être en parallèle et reliés à un conduit commun qui assure la liaison avec le circuit.

L'installation peut comporter un seul conduit d'introduction d'un réactif, elle peut bien sûr comporter plusieurs conduits d'introduction de plusieurs réactifs, ces conduits peuvent déboucher individuellement dans le circuit, ils peuvent aussi être en parallèle et reliés à un conduit commun qui assure la liaison avec le circuit.

Le liquide de rinçage peut être, par exemple, le liquide utilisé pour réaliser la réaction chimique, il peut aussi être de l'eau.

De manière avantageuse, selon l'invention, l'ouverture et la fermeture de la vanne qui isole du circuit bouclé le conduit d'introduction d'au moins un réactif, sont commandables en réponse aux informations données par les moyens de contrôle de l'avancement de la réaction.

Selon un mode de réalisation, l'installation objet de l'invention, peut comporter en amont de la chambre de réaction un conduit d'alimentation d'un étalon, éventuellement muni d'une vanne. Ce conduit peut rejoindre le conduit d'alimentation d'échantillons en aval de sa vanne.

Avantageusement, l'installation objet de l'invention est telle que le circuit comporte des moyens d'ajustement de la quantité d'échantillon.

Le plus souvent, les moyens d'ajustement de la quantité d'échantillon sont des moyens d'ajustement du volume de l'échantillon.

Selon un mode de réalisation, le récipient du vase d'expansion est muni d'une sortie de trop plein portant une vanne et constitue un moyen d'ajustement du volume de l'échantillon.

Selon un mode de réalisation avantageux de l'installation conforme à l'invention l'évent prévu sur le récipient du vase d'expansion est raccordé à un récupérateur des gaz nés de la réaction chimique.

On peut alimenter dans le circuit bouclé des volumes différents d'échantillons et le choix et l'ajustement du volume de l'échantillon peuvent être aisément automatisés en utilisant un détecteur de niveau associé au récipient.

Le ou les réactifs peuvent être introduits dans le circuit bouclé directement dans le récipient, ainsi le mélange entre le ou les réactifs et l'échantillon peut être assuré, le conduit reliant le récipient au reste du circuit étant muni d'une vanne.

Le ou les réactifs peuvent aussi être introduits dans le circuit en aval du récipient. Il est alors avantageux qu'une chambre de mélange soit placée, dans le circuit, en aval du dernier conduit d'arrivée d'un réactif, directement à l'entrée de la chambre de réaction, le conduit reliant la chambre de mélange et la chambre de réaction étant muni d'une vanne. Ainsi, dans la chambre de mélange, le mélange entre le ou les réactifs et l'échantillon peut être assuré.

Dans l'installation, l'échantillon, le ou les réactifs, le liquide de rinçage, le produit de la réaction, et éventuellement l'étalon, circulent sous l'effet de la pression de l'échantillon ou du ou des réactifs, ou du liquide de rinçage. De préférence, l'installation est telle qu'elle comporte des moyens de circulation qui peuvent être constitués par une pompe de tout type habituellement utilisé.

Ainsi, selon le procédé conforme à l'invention, on augmente ou on diminue la durée du chauffage du produit dans la chambre de réaction en jouant sur le débit de la pompe.

Comme moyen de circulation on utilise de préférence une pompe volumétrique délivrant un flux continu. Avantageusement, une telle pompe comporte au moins deux pistons montés en opposition déplacés par une came tournant autour d'un axe perpendiculaire à l'axe de déplacement des pistons et des moyens de rappel associés à chaque piston.

Les moyens de contrôle de l'avancement de la réaction peuvent être constitués par une sonde de mesure de la densité optique ou par suivi de la coloration du produit de la réaction, une zone du circuit étant en matériau transparent.

L'installation de réaction chimique par voie humide selon l'invention peut être commandée manuellement par un opérateur manoeuvrant selon un cycle prédéterminé les différentes vannes, le chauffage par micro-ondes et éventuellement les moyens de circulation et/ou la zone de refroidissement.

De préférence, un microprocesseur constitue les moyens de commande qui manoeuvrent selon un cycle prédéterminé l'ouverture et la fermeture des vannes, la mise en marche et l'arrêt du chauffage par micro-ondes et éventuellement des moyens de circulation et/ou de la zone de refroidissement.

L'installation de réaction chimique, objet de l'invention, est avantageusement réalisée et, matériaux résistant bien à la corrosion, les réactis utilisés étant particulièrement agressifs et la température atteinte dans la chambre de réaction étant élevée. Ainsi, un tel appareil est réalisé en verre et/ou en polytétrafluoroéthylène.

L'installation de réaction chimique, objet de l'invention, peut réaliser diverses réactions chimiques par voie humide sur une succession. d'échantillons. Il est particulièrement destiné à être utilisé pour des réactions chimiques de minéralisation d'une succession d'échantillons.

L'invention sera mieux comprise par la description des figures ci-jointes qui représentent à titre d'exemple, schématiquement, sans échelle déterminée, divers modes de réalisation de l'appreil objet de la présente invention pour la mise en oeuvre du procédé sel on l'invention.
La figure 1 représente schématiquement un mode de réalisation d'un appareil pour réaliser une réaction chimique par voie humide sur une succession d'échantillons.
La figure 2 représente schématiquement un autre mode de réalisation dudit appareil.
La figure 3 représente schématiquement un appareil comportant un circuit bouclé.
La figure 4 représente schématiquement l'installation selon l'invention, comportant un circuit bouclé.
La figure 5 représente divers modes de montage de la chambre de réaction placée dans une cavité d'application des micro-ondes.
La figure 6 est un schéma de principe d'un mode de réalisation des moyens de circulation.

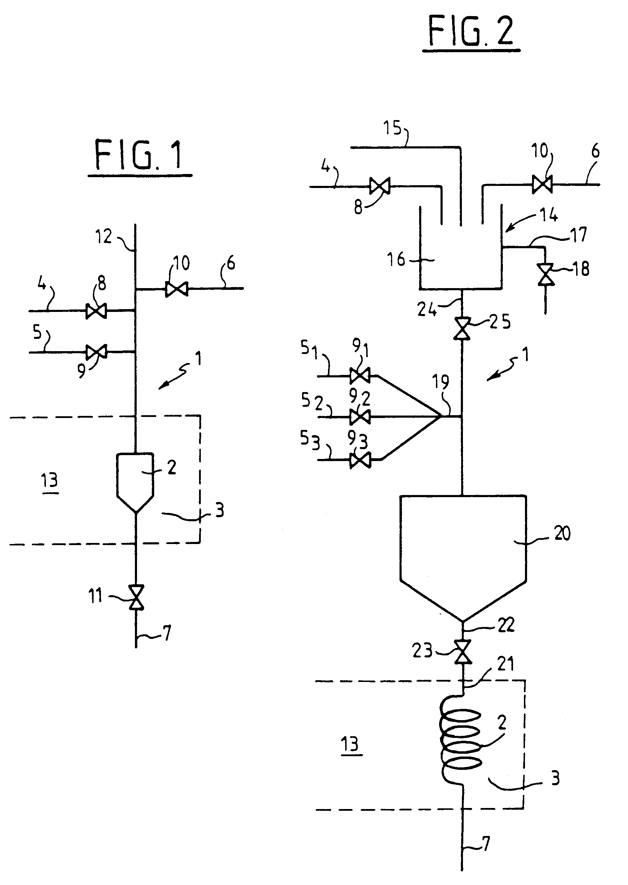

L'appareil pour réaliser une réaction chimique par voie humide sur une succession d'échantillons mettant en oeuvre un chauffage par micro-ondes représenté figure 1 comprend un circuit (1) comportant une chambre de réaction (2) placée dans une cavité d'application (3) des micro-ondes constituée par le segment terminal d'un guide d'ondes (13).

En se référant au sens de déplacement de l'échantillon dans le circuit (1), l'appareil comporte en amont de la chambre de réaction (2) un conduit (4) d'alimentation d'échantillons, un conduit (5) d'introduction d'au moins un réactif, et un conduit (6) d'alimentation de liquide de rinçage. En aval de la chambre de réaction (2) l'appareil présente un conduit (7) de sortie du produit de la réaction.

Le conduit (4) d'alimentation d'échantillons, le conduit (5) d'introduction d'au moins un réactif et le conduit (6) d'alimentation de liquide de rinçage sont respectivement munis de vannes (8, 9, 10).

Le conduit (5) d'introduction d'au moins un réactif peut introduire dans le circuit (1), un seul réactif ou successivement plusieurs réactifs ou encore un mélange d'au moins deux réactifs, selon les besoins de la réaction chimique.

Selon le présent mode de réalisation, le conduit (7) de sortie du produit de la réaction est également muni d'une vanne (11). La vanne (11) est destinée à empêcher l'écoulement du produit hors du circuit (1) pendant le temps nécessaire à l'accomplissement de la réaction dans la chambre de réaction (2).

Le circuit (1) de l'appareil présente également un conduit appelé évent (12) destiné à mettre en communication l'espace intérieur du circuit (1) et l'atmosphère. L'évent (12) permet, notamment, aux gaz, nés de la réaction chimique, de s'échapper hors du circuit (1).

Le fonctionnement de l'appareil de la figure 1 va être décrit brièvement ci-après.

Le conduit (4) d'alimentation d'échantillons est relié à une source d'échantillons constituée par exemple par une ligne d'échantillonnage en provenance d'une installation. De même le conduit (6) d'alimentation de liquide de rinçage est relié à une source de liquide de rinçage.

Les vannes (8, 9, 10, 11) étant préalablement fermées, on ouvre la vanne (8) du conduit (4) d'alimentation d'échantillons et on alimente dans le circuit (1) une quantité prédéterminée d'échantillon [opération a], en amont de la chambre de réaction (2), par exemple au moyen d'une pompe volumétrique. On referme alors la vanne (8).

On ouvre la vanne (9) du conduit (5) d'introduction d'un réactif et on introduit dans le circuit (1) la quantité souhaitée de réactif [opération b], par exemple au moyen d'une pompe volumétrique, puis on referme la vanne (9).

L'échantillon et le réactif sont donc présents dans la chambre de réaction (2). On met en fonctionnement, pendant un temps prédéterminé le générateur de micro-ondes et l'on chauffe ainsi la chambre de réaction (2) placée dans la cavité d'application (3) des micro-ondes [opération c] .

On ouvre alors la vanne (11) et on récupère par le conduit de sortie (7) le produit de la réaction chimique [opération d], celui-ci sortant du circuit (1) sous l'effet de la gravité.

Quand tout le produit de la réaction a été récupéré, on ouvre la vanne (10) du conduit (6) d'alimentation de liquide de rinçage et l'on rince le circuit, [opération e], le liquide de rinçage souillé sortant du circuit (1) par le conduit (7) étant dirigé vers un bac de stockage d'effluents.

Le rinçage du circuit (1) étant terminé on ferme la vanne (10) du conduit (6) d'alimentation de liquide de rinçage puis la vanne (11) du conduit de sortie (7), l'appareil est prêt a recevoir un nouvel échantillon alimenté par le conduit (4) relié à la ligne d'échantillonnage et à réaliser une réaction chimique par voie humide sur un nouvel échantillon en répétant les opérations a) à e) ci-avant.

L'appareil pour réaliser une réaction chimique sur une succession d'échantillons selon le mode de réalisation représente figure 2 comprend également un circuit (1) comportant une chambre de réaction (2) placée dans une cavité d'application (3) des micro-ondes. Il comprend en outre des moyens d'ajustement (14) de la quantité d'échantillon et un conduit (15) d'alimentation d'un étalon.

Les moyens d'ajustement (14) de la quantité d'échantillon sont des moyens d'ajustement du volume de l'échantillon. Selon le présent mode de réalisation, ils sont constitués par un récipient (16) dans lequel débouche le conduit (4) d'alimentation d'échantillons, le récipient (16) étant muni d'une sortie de trop plein (17) portant une vanne (18) et d'un conduit de liaison (24) au reste du circuit (1), pourvu d'une vanne (25).

Dans le récipient (16) arrivent également le conduit (15) d'alimentation d'un étalon, ainsi que le conduit (6) d'alimentation de liquide de rinçage, muni d'une vanne (10).

Le récipient (16) est ouvert pour permettre l'échappement des gaz de la réaction chimique.

Le circuit (1) tel que représenté comporte trois conduits (5₁, 5₂, 5₃) d'introduction de réactifs munis respectivement des vannes (9₁, 9₂, 9₃), ces trois conduits sont montés en parallèle et sont reliés à un conduit commun (19) qui assure la liaison avec le circuit (1).

En aval du conduit commun (19) d'introduction des réactifs dans le circuit (1) celul-ci présente une chambre de mélange (20), placée directement à l'entrée (21) de la chambre de réaction (2). Le conduit (22) reliant la chambre de mélange (20) et la chambre de réaction (2) est muni d'une vanne (23).

La chambre de réaction (2) telle que représentée est tubulaire et enroulée en hélice, ses caractéristiques géométriques ont été déterminées pour que le temps de séjour de l'échantillon et des réactifs soit suffisant dans la chambre de réaction (2). Le produit de la réaction s'écoule directement par le conduit de sortie (7).

On va décrire ci-après brièvement la réalisation d'une réaction chimique au moyen de l'appareil selon le présent mode de réalisation.

Le conduit (4) d'alimentation d'échantillons et le conduit (6) d'alimentation de liquide de rinçage étant reliés respectivement à une source d'échantillons et à une source de liquide de rinçage, les vannes (8, 10, 9₁, 9₂, 9₃, 18, 23) sont fermées.

Par le conduit (15) on alimente un volume prédéterminé d'étalon dans le circuit (1) [opération a], l'étalon vient remplir en partie la chambre de mélange (20). Après ouverture des vannes (9₁, 9₂, 9₃) on introduit dans le circuit (1) et par là dans la chambre de mélange (20) les quantités nécessaires de réactifs [opération b], puis on referme les vannes (9₁, 9₂, 9₃). Les réactifs et l'étalon se mélangent dans la chambre de mélange (20).

On met en fonctionnement, le générateur de micro-ondes et l'on chauffe ainsi la chambre de réaction (2) placée dans la cavité d'application (3) des micro-ondes.

On ouvre la vanne (23) le mélange constitué par l'étalon et les réactifs s'écoule de la chambre de mélange (20) vers la chambre de réaction (2). Lors de son passage dans la chambre de réaction (2), le mélange est chauffé [opération c] pendant un temps prédéterminé, lié aux caractéristiques géométriques de la chambre de réaction (2). La réaction chimique s'effectue, le produit de la réaction correspondant à l'étalon s'écoule par le conduit de sortie (7) [opération d].

Quand tout le produit de la réaction a été récupéré, on ouvre la vanne (10) du conduit (6) d'alimentation de liquide de rinçage et l'on rince le circuit (1) [opération e]. L'appareil est alors prêt pour réaliser une réaction chimique par voie humide sur une succession d'échantillons.

Les vannes (10, 9₁, 9₂, 9₃, 18, 23, 25) étant fermées, on ouvre la vanne (8) du conduit (4) d'alimentation d'échantillons et l'on remplit le récipient (16) des moyens d'ajustement (14) du volume de l'échantillon jusqu'au dessus de la sortie de trop plein (17), puis on ferme la vanne (8).

On ouvre la vanne (18) et l'excès d'échantillon s'écoule par le trop plein (17), le volume d'échantillon présent dans le récipient (16) et qui sera alimenté dans le circuit (1) est donc parfaitement défini.

On ouvre la vanne (25) l'échantillon s'écoule dans la chambre de mélange (20) [opération a]. On ouvre les vannes (9₁, 9₂, 9₃) et l'on introduit les réactifs nécessaires dans le circuit (1) [opération b] et par là dans la chambre de mélange (20).

On met en fonctionnement le générateur de micro-ondes et l'on chauffe la chambre de réaction (2) placée dans la cavité d'application (3) des micro-ondes.

On ouvre la vanne (23), le mélange, constitué par l'échantillon et les réactifs, s'écoule de la chambre de mélange (20) vers la chambre de réaction (2), où il est chauffé pendant un temps prédéterminé [opération c]. La réaction chimique s'effectue et le produit de la réaction de l'échantillon s'écoule par le conduit de sortie (7) [opération d].

Quand tout le produit de la réaction a été récupéré, on ouvre la vanne (10) du conduit (6) d'alimentation de liquide de rinçage et l'on rince le circuit (1) [opération e].

L'appareil est alors prêt pour réaliser une réaction chimique par voie humide sur un autre échantillon, après ouverture de la vanne (8) du conduit (4) d'alimentation d'échantillons.

Les opérations a) à e) conduisant à la réaction chimique sur l'échantillon seront répétées autant de fois que nécessaire jusqu'à épuisement de la succession d'échantillons.

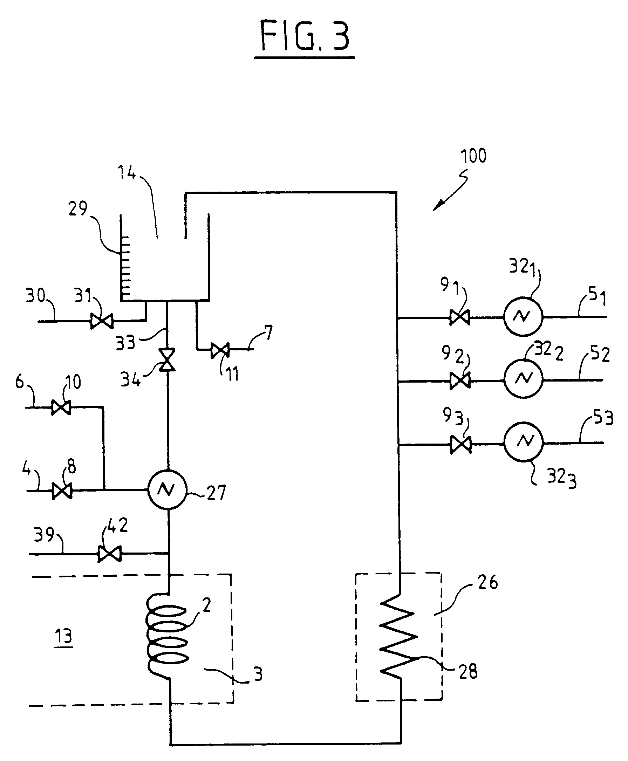

L'appareil pour réaliser une réaction chimique sur une succession d'échantillons selon le mode de réalisation représenté figure 3 comporte un circuit qui est un circuit bouclé (100).

Dans le présent texte on s'est référé, en considérant le sens de déplacement de l'échantillon dans le circuit, à l'amont et à l'aval de la chambre de réaction pour situer les divers éléments constituant le circuit.

Par convention, nous préci sons que dans le circuit bouclé tout produit, tel que échantillon, étalon, réactif, liquide de rinçage, destiné à traverser la chambre de réaction est alimenté ou introduit en amont de celle-ci par des conduits débouchant dans le circuit en amont de la chambre de réaction. Ainsi, le produit de la réaction est récupéré en aval de la chambre de réaction car il ne la traverse plus, le conduit de sortie du produit de la réaction est donc situé en aval de la chambre de réaction.

Le circuit bouclé (100) de l'appareil de réaction chimique comprend une chambre de réaction (2) placée dans la cavité d'application (3) des micro-ondes d'un guide d'ondes (13), une zone de refroidissement (26) placée à la sortie de la chambre de réaction (2), des moyens d'ajustement (14) du volume de l'échantillon et des moyens de circulation (27).

La zone de refroidissement (26) peut être constituée par un serpentin (28) traversant un mélange refrigérant.

Les moyens d'ajustement (14) du volume de l'échantillon sont, selon le présent mode de réalisation, constitués par un récipient gradué (29) muni d'un conduit d'évacuation (30) portant une vanne (31). Les moyens d'ajustement (14) du volume d'échantillon sont bien sûr placés en amont de la chambre de réaction (2). Le conduit de liaison (33) du récipient (29) au reste du circuit bouclé (100) est pourvu d'une vanne (34).

Le récipient (29) est ouvert à sa partie supérieure pour permettre l'échappement des gaz nés de la réaction chimique.

Le récipient (29) des moyens d'ajustement (14) du volume d'échantillon constitue le vase d'expansion du circuit bouclé (100).

Les moyens de circulation (27) peuvent être constitués par une pompe volumétrique délivrant un flux continu, un mode de réalisation d'une telle pompe sera décrit ultérieurement.

A la pompe (27) sont associés des moyens de connexion (non représentés) qui permettent :
- d'aspirer l'échantillon alimenté par le conduit (4) et de le refouler vers le récipient (29),
- d'aspirer l'échantillon, puis l'échantillon mélangé aux réactifs, présent dans le récipient (29) et de le refouler vers la chambre de réaction (2),
- d'aspirer le liquide de rinçage alimenté par le conduit (6) et de le refouler vers la chambre de réaction (2).

En amont de la chambre de réaction (2) le circuit (100) comprend :
- un conduit (4) d'alimentation d'échantillons muni d'une vanne (8), et relié à une ligne d'échantillonnage,
- un conduit (6) d'alimentation de liquide de rinçage, muni d'une vanne (10), ces deux conduits (4, 6) étant reliés à l'aspiration de la pompe (27),
- des conduits (5₁, 5₂, 5₃) d'introduction des réactifs portant chacun une pompe volumétrique d'injection (32₁, 32₂, 32₃) et une vanne (9₁, 9₂, 9₃).

En outre, un conduit (39) d'amené de gaz comprimé, muni d'une vanne (42), débouche dans le circuit bouclé (100) directement à l'entrée de la chambre de réaction (2).

En aval de la chambre de réaction (2), le circuit (100) comprend un conduit de sortie (7) du produit de la réaction, muni d'une vanne (11), qui est, selon le présent mode de réalisation associé au récipient gradué (29).

On va décrire ci-après la réalisation d'une réaction chimique par voie humide sur une succession d'échantillons au moyen de l'appareil selon le mode de réalisation représente figure 3.

Le conduit (4) d'alimentation d'échantillons et le conduit (6) d'alimentation de liquide de rinçage étant reliés respectivement à une source d'échantillons et à une source de liquide de rinçage et toutes les vannes du circuit (100) étant préalablement fermées, on met en marche la pompe (27), on ouvre la vanne (34) et la vanne (8) du conduit (4) d'alimentation d'échantillons et l'on remplit le récipient gradué (29) des moyens d'ajustement (14) du volume d'échantillon. On ferme les vannes (8) et (34), puis l'on ouvre la vanne (31) du conduit d'évacuation (30), quand le niveau de l'échantillon atteint la graduation du récipient (29) correspondant au volume choisi, on ferme la vanne (31). Le volume d'échantillon présent dans le récipient et qui sera alimenté dans le circuit (100) est donc parfaitement défini.

On ouvre la vanne (34) et on alimente la quantité prédéterminée d'échantillon dans le circuit bouclé (100) [opération a], on fait circuler au moyen de la pompe (27) l'échantillon dans le circuit bouclé (100) [opération b].

On met en marche la pompe (32₁) d'injection d'un premier réactif, amené par le conduit (5₁), et on ouvre la vanne (9₁) on introduit ainsi un premier réactif dans le circuit bouclé (100) [opération c], puis on referme la vanne (9₁) et on arrête la pompe (32₁).

Le mélange formé par l'échantillon et le premier réactif est ramené dans le récipient (29), puis circule dans la chambre de réaction (2) où il est chauffé [opération d], le générateur de micro-ondes ayant été mis préalablement en fonctionnement.

Le produit de la première réaction de l'échantillon et du premier réactif est alors refroidi par passage dans le serpentin (28) de la zone de refroidissement (26).

Le produit de la première réaction continue à circuler dans le circuit (100), on met en marche la pompe (32₂) d'injection d'un deuxième réactif amené par le conduit (5₂) et on ouvre la vanne (9₂), on introduit ainsi un deuxième réactif dans le circuit bouclé [opération c], puis on referme la vanne (9₂) et on arrête la pompe (32₂).

Le mélange formé par le produit de la première réaction et le deuxième réactif est ramené dans le récipient (29) puis circule dans la chambre de réaction (2) où il est chauffé [opération d], le mélange subit la deuxième réaction.

Le produit de la deuxième réaction est alors refroidi par passage dans le serpentin (28) de la zone de refroidissemet (26).

On répète les opérations c) et d) ci-avant pour le troisième réactif.

On ferme la vanne (34) et on arrête la pompe (27) puis on ouvre la vanne (42) du conduit (39) d'amenée de gaz comprimé. On ouvre la vanne (11) du conduit (7) de sortie du produit de la réaction, le gaz pousse, dans le circuit bouclé (100), le produit de la réaction que l'on récupère [opération e].

Quand tout le produit de la réaction a été récupéré, on referme la vanne (42) et la vanne (11) du conduit de sortie (7). On ouvre la vanne (34) et la vanne (10) du conduit (6) d'alimentation du liquide de rinçage, on met en marche la pompe (27) et l'on rince le circuit [opération f] en faisant circuler le liquide dans le circuit bouclé (100). On ouvre la vanne (11) du conduit de sortie (7) et l'on dirige le liquide de rinçage souillé vers un bac de stockage d'effluents, puis l'on referme la vanne (10) du conduit (6) d'alimentation de liquide de rinçage et la vanne (11) du conduit de sortie (7).

L'appareil est alors prêt pour réaliser une réaction chimique par voie humide sur un autre échantillon.

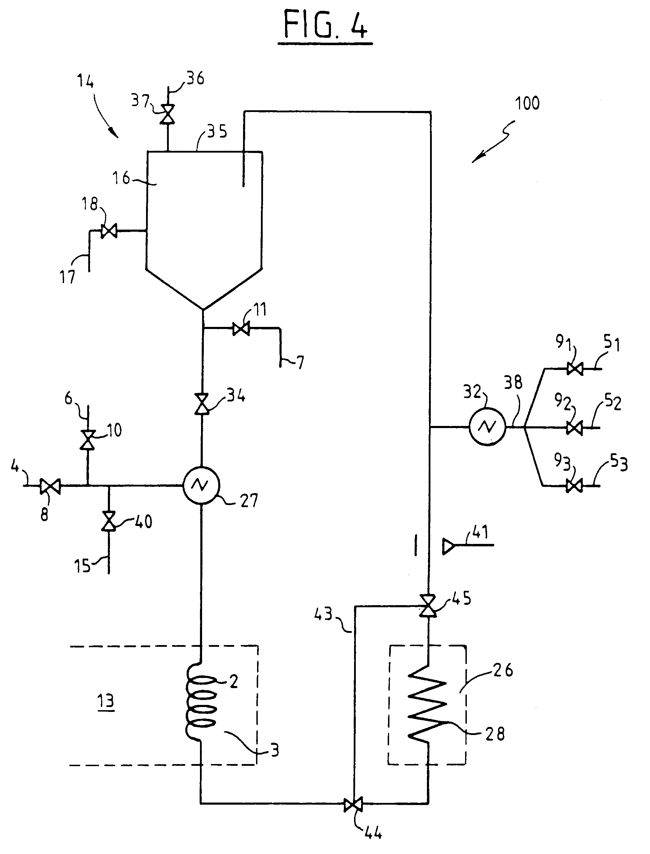

L'appareil pour réaliser une réaction chimique sur une succession d'échantillons selon le mode de réalisation représenté figure 4 comporte un circuit qui est un circuit bouclé (100). Ce circuit bouclé (100) est analogue au circuit bouclé selon le mode de réalisation représenté figure 3 et seuls les éléments constitutifs différents seront décrits.

Selon le présent mode de réalisation, les moyens d'ajustement (14) du volume de l'échantillon sont constitués par un récipient (16) muni d'une sortie de trop plein (17) portant une vanne (18). Le récipient (16) n'est pas à l'air libre, il est pourvu d'un couvercle (35) étanche, muni d'un évent (36) portant une vanne (37). Un tel récipient permet de pouvoir réaliser des réactions chimiques à la pression atmosphérique ou sous pression par fermeture de la vanne (37).

L'évent (36) peut éventuellement être relié à un condenseur des vapeurs ou à un récupérateur des gaz nés de la réaction chimique.

Le circuit bouclé (100) comporte trois conduits (5₁, 5₂, 5₃) d'introduction de réactifs montés en parallèle et reliés à un conduit commun (38) sur lequel est placée une pompe (32) volumétrique d'injection des réactifs. Chaque conduit (5₁, 5₂, 5₃) porte une vanne (9₁, 9₂, 9₃).

Le circuit bouclé (100) comporte également un conduit (15) d'alimentation d'un étalon, portant une vanne (40).

L'appareil selon le mode de réalisation représente figure 4 comporte en outre des moyens de contrôle (41) de l'avancement de la réaction par exemple par colorimétrie.

On va décrire ci-après la réalisation d'une réaction chimique par voie humide sur une succession d'échantillons au moyen de l'appareil selon le présent mode de réalisation.

Le conduit (4) d'alimentation d'échantillons et le conduit (6) d'alimentation de liquide de rinçage étant reliés respectivement à une source d'échantillons et à une source de liquide de rinçage et toutes les vannes du circuit (100) étant préalablement fermées, on met en marche la pompe (27), on ouvre la vanne (34) et la vanne (40) du conduit (15) d'alimentation de l'étalon et l'on remplit le récipient (16) des moyens d'ajustement (14) du volume d'échantillon, jusqu'au dessus de la sortie de trop plein (17) puis l'on ferme la vanne (40). On ouvre alors la vanne (18) et l'excès d'étalon s'écoule par le trop plein (17), le volume d'étalon présent dans le récipient (16) et qui sera alimenté dans le circuit bouclé (100) est donc parfaitement défini. On referme la vanne (18).

On ouvre la vanne (34) et on alimente la quantité prédéterminée d'étalon dans le circuit bouclé (100) [opération a], on fait circuler au moyen de la pompe (27) l'étalon dans le circuit bouclé (100) [opération b].

On met en marche la pompe (32) d'injection de réactif et l'on ouvre la vanne (9₁) du conduit (5₁) d'introduction du premier réactif, on introduit ainsi un premier réactif dans le circuit bouclé (100) [opération c], puis on referme la vanne (9₁) et on arrête la pompe (32).

Le mélange formé par l'étalon et le premier réactif est ramené dans le récipient (16) puis circule dans la chambre de réaction (2) où il est chauffé [opération d], le générateur de micro-ondes ayant été mis préalablement en fonctionnement.

Le produit de la première réaction de l'étalon et du premier réactif est alors refroidi par passage dans le serpentin (28) de la zone de refroidissement (26).

Le produit de la première réaction continue à circuler dans le circuit (100), on met en marche la pompe (32) d'injection d'un deuxième réactif amené par le conduit (5₂) et on ouvre la vanne (9₂), on introduit ainsi un deuxième réactif dans le circuit bouclé (100) [opération c] , puis on referme la vanne (9₂) et on arrête la pompe (32).

Le mélange formé par le produit de la première réaction et le deuxième réactif est ramené dans le récipient (16) puis circule dans la chambre de réaction (2) où il est chauffé [opération d], le mélange subit la deuxième réaction.

Le produit de la deuxième réaction est alors refroidi par passage dans le serpentin (28) de la zone de refroidissemet (26).

On répète les opérations c) et d) ci-avant pour le troisième réactif.

On ferme la vanne (34), on ouvre la vanne (7) du conduit de sortie (11) et la vanne (10) du conduit (6) d'alimentation de liquide de rinçage.

Le liquide de rinçage, sous l'effet de la pompe (27), circule dans le circuit bouclé (100) et chasse devant lui le produit de la réaction que l'on récupère par le conduit (7) [opération e]. Quand tout le produit de la réaction a été récupéré, le liquide de rinçage souillé est dirigé vers un bac de stockage d'effluents. Le circuit bouclé (100) est donc rincé [opération f].

L'appareil est alors prêt pour réaliser une réaction chimique par voie humide sur des échantillons en répétant les opérations a) à f) ci-avant sur chaque échantillon de la succession.

Bien sûr après chaque injection de réactif et chaque réaction, on suit l'avancement de la réaction chimique par les moyens de contrôle (41). On peut augmenter ou diminuer la durée du chauffage du produit dans la chambre de réaction (2) en jouant sur le débit de la pompe (27).

On peut aussi augmenter la durée du chauffage du produit dans la chambre de réaction (2) en établissant une recirculation du produit dans le circuit bouclé (100) après chaque injection de réactif. Dans ce cas, le circuit bouclé (100) comporte avantageusement une dérivation (43) qui peut être isolée par des vannes (44, 45) trois voies, ce qui permet d'éviter le refroidissement du produit de la réaction par passage dans le serpentin (28) des moyens de refroidissement (26).

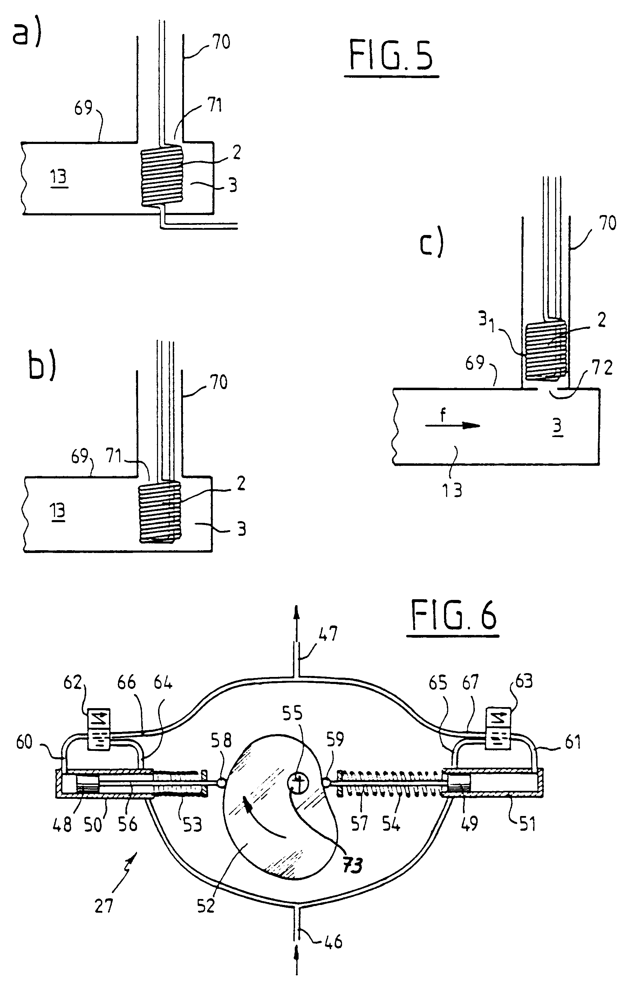

Les figures 5a, 5b et 5c montrent schématiquement le montage de la chambre de réaction (2) placée dans une cavité d'application (3) des micro-ondes.

Selon les figures 5a et 5b la cavitée d'application (3) des micro-ondes est plus spécifiquement la cavité d'application des micro-ondes d'un MICRODIGEST 300, appareil commercialisé par la Société PROLABO.

Dans cet appareil, la cavité d'application (3) présente sur sa paroi supérieure (69) une ouverture (71) qui permet de placer la chambre de réaction (2) dans la cavité d'application (3) des micro-ondes. La cavité d'application (3) comporte une cheminée (70) bordant l'ouverture (71) et s'élevant sur une hauteur telle qu'elle forme une barrière d'absorption des micro-ondes.

Selon la figure 5c, la cavité d'application (3) des micro-ondes est plus spécifiquement la cavité d'application des micro-ondes d'un MAXIDIGEST MX 350, appareil commercialisé par la Société PROLABO.

Dans cet appareil le guide d'ondes (13) comporte une ouverture (72) ménagée dans sa paroi supérieure (69). Cette ouverture constitue une fenêtre de couplage inclinée par rapport à la direction de propagation f des micro-ondes dans la cavité d'application (3). La fenêtre de couplage (72) assure une propagation des micro-ondes à l'intérieur de la cheminée (70) qui constitue une cavité d'application secondaire (3₁) dans laquelle est placée la chambre de réaction (2).

Les moyens de circulation, selon le mode de réalisation représente figure 6, sont avantageusement utilisés dans l'appareil pour réaliser une réaction chimique par voie humide sur une succession d'échantillons, objet de l'invention. Ces moyens de circulation sont formés par une pompe (27) reliée à deux conduits (46, 47) de branchement de la pompe (27).

La pompe (27) comporte deux pistons (48, 49) montés en opposition, se déplaçant dans deux cylindres (50, 51), ils sont animés d'un mouvement linéaire alternatif au moyen d'une came plate (52), possédant un profil approprié, à laquelle sont associés des moyens de rappel constitués par deux ressorts (53, 54). Les pistons (48, 49) sont montés de façon symétrique par rapport à l'axe de rotation (55) de la came (52).

Chaque tige (56, 57) de piston (48, 49) est guidée linéairement et est munie d'un dispositif d'anti-rotation. Les tiges (56, 57) des pistons (48, 49) s'appuient sur la came (52) par l'intermédiaire de galets (58, 59). Le contact permanent entre les galets (58, 59) et la came (52) est assuré par les ressorts (53, 54).

L'axe d'entraînement (73) de la came (52) est entraîné en rotation, il est perpendiculaire à l'axe de déplacement des pistons (48, 49). L'axe d'entraînement (73) peut être entraîné au moyen d'un moteur et d'une transmission, par exemple par courroie ou par pignons. De préférence, afin d'éviter les jeux ou glissements, la came (52) est directement montée sur l'arbre de sortie d'un motoréducteur à vitesse lente, constante et connue avec précision.

Chaque cylindre (50, 51), a sa sortie (60, 61) reliée à une électrovanne (62, 63) à trois voies et deux positions. Les sorties (64) et (65) des électrovannes (62, 63) sont reliées entre elles et, au conduit (46) de branchement de la pompe (27), et les sorties (66) et (67) sont reliées entre elles et au conduit (47) de branchement de la pompe (27).

La manoeuvre des électrovannes (62, 63) est commandée au moyen de contacts électriques activés à des positions angulaires très précises de la came (52).

Le mouvement des deux pistons (48, 49) est déterminé par la forme de la came (52). Le profil de celle-ci est défini de façon telle que la somme instantanée des vitesses d'avance des pistons soit constante.

Le débit obtenu avec de tels moyens de circulation est parfaitement régulier, même pour de très faibles débits et est indépendant de la pression de refoulement. De tels moyens de circulation sont également volumétriques, un tour de came délivrant deux volumes de cylindre, connaissant la vitesse de rotation de la came, il est aisé de connaître avec précision le débit de liquide circulant dans le circuit et en particulier dans la chambre de réaction (2).

Bien entendu, l'invention n'est nullement limitée aux modes de réalisation décrits spécifiquement dans le présent exposé et l'on peut adopter des variantes ou perfectionnements portant sur les divers moyens mis en oeuvre sans pour autant sortir du cadre de l'invention telle que définie dans les revendications.

Sans sortir du cadre de l'invention telle que définie dans les revendications, on peut aussi combiner entre eux deux ou plusieurs éléments constitutifs de l'appareil qui n'ont été décrits ci-avant qu'à titre d'exemples et ne sont nullement limitatifs.

L'appareil et le procédé de réaction chimique par voie humide sur une succession d'échantillons sont destinés à réaliser des réactions chimiques très diverses. Ils sont particulièrement destinés pour réaliser des réactions chimiques telles que le traitement acide ou alcalin par voie humide d'échantillons à des fins de dissolution, d'hydrolyse ou de minéralisation.

## Revendications

1. Installation pour réaliser une réaction chimique par voie humide, en particulier sur une succession d'échantillons, mettant en oeuvre un chauffage par micro-ondes, comportant une chambre de réaction (2) placée dans une cavité d'application (3) des micro-ondes, l'ensemble étant disposé dans un circuit bouclé (100) lui-même équipé de moyens (4, 5₁, 5₂, 5₃) d'introduction de réactifs et/ou d'échantillons et des moyens (6) d'alimentation de liquide de rinçage, ledit circuit bouclé (100) comprenant en aval de la chambre de réaction (2) un refroidisseur (26, 28), une dérivation (43) montée entre l'entrée et la sortie du refroidisseur (26, 28) et des moyens de contrôle (41) de l'avancement de la réaction chimique placés en aval du refroidisseur (26, 28), le circuit bouclé (100) comprenant en outre un vase d'expansion constitué par un récipient (16) pourvu d'un couvercle étanche (35) et muni d'un évent (36) et d'un conduit (7) de prélévement du produit de la réaction.

2. Installation selon la revendication 1, caractérisée en ce que la dérivation (43) comporte à chacune de ses extrémités une vanne (44, 45) permettant de l'isoler du circuit bouclé (100), l'ouverture et la fermeture desdites vannes (44, 45) étant commandables en réponse aux informations données par les moyens de contrôle (41) de l'avancement de la réaction chimique.

3. Installation selon l'une des revendications 1 ou 2, caractérisée en ce que les moyens d'introduction de réactifs et/ou d'échantillons comprennent un conduit (4) d'alimentation d'échantillons, au moins un conduit (5₁) d'introduction d'au moins un réactif, en ce que les moyens d'alimentation en liquide de rinçage sont constitués par un conduit d'alimentation (6) de liquide de rinçage, chaque conduit (4, 5₁, 6) étant raccordé au circuit bouclé (100) par une vanne (8, 9₁, 10) permettant de l'isoler dudit circuit bouclé (100), et en ce qu'il est prévu des moyens de commandes de l'ouverture et de la fermeture desdites vannes (8, 9₁,10).

4. Installation selon la revendication 3, caractérisée en ce que l'ouverture et la fermeture de la vanne (9₁) qui isole du circuit bouclé (100) le conduit (5₁) d'introduction d'au moins un réactif, sont commandables en réponse aux informations données par les moyens de contrôle (41) de l'avancement de la réaction.

5. Installation selon l'une quelconque des revendications 1 à 4, caractérisée en ce qu'elle comprend une pompe (27) comportant au moins deux pistons (48, 49) montés en opposition déplacés par une came (52) tournant autour d'un axe (55) perpendiculaire à l'axe de déplacement des pistons (48, 49) et des moyens de rappel (53, 54) associés à chaque piston (48, 49).

6. Installation selon l'une quelconque des revendications 1 à 5, caractérisée en ce que le récipient (16) du vase d'expansion est muni d'une sortie de trop plein (17) portant une vanne (18) et constitue un moyen d'ajustement du volume de l'échantillon.

7. Installation selon l'une quelconque des revendications 1 à 6, caractérisée en ce que l'évent (36) prévu sur le récipient (16) du vase d'expansion est raccordé à un récupérateur des gaz nés de la réaction chimique.

8. Installation selon l'une quelconque des revendications 1 à 7, caractérisée en ce que les moyens de contrôle (41) comportent une sonde de mesure placée au sein du produit de la réaction et apte à mesurer la conductivité de celui-ci.

9. Installation selon l'une quelconque des revendications 1 à 7, caractérisée en ce que les moyens de contrôle (41) sont aptes à mesurer la densité optique ou la coloration du produit de la réaction passant dans une zone du circuit bouclé (100) réalisé en matériau transparent à la lumière.

10. Procédé d'utilisation de l'installation selon l'une des revendications 1 à 9 , caractérisé en ce qu'il comprend les étapes consistant à :
a) alimenter une quantité prédéterminée d'échantillon dans le circuit bouclé (100),
b) faire circuler l'échantillon dans le circuit bouclé (100),
c) introduire au moins un réactif dans le circuit bouclé (100),
d) chauffer la chambre de réaction (2) par application de micro-ondes pendant un temps prédéterminé,
e) refroidir le produit de la réaction,
f) contrôler l'avancement de la réaction
g) récupérer le produit de la réaction,
h) alimenter du liquide de rinçage et rincer le circuit bouclé (100),
i) en fonction du résultat obtenu à l'étape f) on répète certaines des opérations a) à f).

11. Procédé selon la revendication 10, caractérisé en ce qu'entre les étapes b) et g), on répète au moins une fois les étapes c) à d).

12. Procédé selon l'une des revendications 10 ou 11, caractérisé en ce qu'en fonction des informations fournies par les moyens de contrôle (41) de l'avancement de la réaction à l'étape f), on ajuste les paramètres de la réaction chimique.

13. Procédé selon la revendication 12, caractérisé en ce qu'on augmente la durée du chauffage du produit dans la chambre de réaction (2) en établissant une recirculation du produit dans le circuit bouclé (100) après chaque injection de réactif et en shuntant le refroidisseur (26, 28) en faisant circuler le produit dans la dérivation (43).

14. Procédé selon la revendication 12, caractérisé en ce qu'on augmente ou on diminue la durée du chauffage du produit dans la chambre de réaction (2) en jouant sur le débit de la pompe (27).

## Claims

1. Plant for carrying out a chemical reaction by a wet method, especially on a succession of samples, employing microwave heating, containing a reaction chamber (2) placed in a microwave application cavity (3), the assembly being arranged in a looped circuit (100) which is itself equipped with means (4, 5₁, 5₂, 5₃) for introduction of reactants and/or of samples and means (6) for feeding with rinsing liquid, the said looped circuit (100) comprising, downstream of the reaction chamber (2), a cooler (26, 28), a shunt (43) mounted between the entry and exit of the cooler (26, 28) and means (41) for monitoring the progress of the chemical reaction, placed downstream of the cooler (26, 28), the looped circuit (100) comprising, in addition, an expansion vessel consisting of a receptacle (16) provided with a leakproof lid (35) and equipped with a vent (36) and with a pipe (7) for withdrawing the product of the reaction.

2. Plant according to Claim 1, characterized in that the shunt (43) possesses, at each of its ends, a valve (44, 45) enabling it to be isolated from the looped circuit (100), it being possible for the opening and closing of the said valves (44, 45) to be controlled in response to the information given by the means (41) for monitoring the progress of the chemical reaction.

3. Plant according to either of Claims 1 and 2, characterized in that the means for introduction of reactants and/or of samples comprise a sample feed pipe (4) and at least one pipe (5₁) for introduction of at least one reactant, in that the means for feeding with rinsing liquid consist of a rinsing liquid feed pipe (6), each pipe (4, 5₁, 6) being connected to the looped circuit (100) through a valve (8, 9₁, 10) enabling it to be isolated from the said looped circuit (100), and in that means are provided for controlling the opening and closing of the said valves (8, 9₁, 10).

4. Plant according to Claim 3, characterized in that the opening and closing of the valve (9₁) which isolates the pipe (5₁), for introduction of at least one reactant, from the looped circuit (100) can be controlled in response to the information given by the means (41) for monitoring the progress of the reaction.

5. Plant according to any one of Claims 1 to 4, characterized in that it comprises a pump (27) containing at least two plungers (48, 49) mounted in opposition, moved by a cam (52) rotating about an axis (55) perpendicular to the axis of travel of the plungers (48, 49), and return means (53, 54) operating in association with each plunger (48, 49).

6. Plant according to any one of Claims 1 to 5, characterized in that the receptacle (16) of the expansion vessel is equipped with an overflow outlet (17) carrying a valve (18), and constitutes a means of adjustment of the volume of the sample.

7. Plant according to any one of Claims 1 to 6, characterized in that the vent (36) provided on the receptacle (16) of the expansion vessel is connected to a device for recovering gases evolved in the chemical reaction.

8. Plant according to any one of Claims 1 to 7, characterized in that the monitoring means (41) contain a measuring probe placed in the product of the reaction and capable of measuring the conductivity of the latter.

9. Plant according to any one of Claims 1 to 7, characterized in that the monitoring means (41) are capable of measuring the optical density or the coloration of the product of the reaction passing through a zone of the looped circuit (100) made of material which is transparent to light.

10. Process for using the plant according to one of Claims 1 to 9, characterized in that it comprises the steps which consist in:
a) feeding a predetermined quantity of sample into the looped circuit (100),
b) circulating the sample in the looped circuit (100),
c) introducing at least one reactant into the looped circuit (100),
d) heating the reaction chamber (2) by application of microwaves for a predetermined time,
e) cooling the product of the reaction,
f) monitoring the progress of the reaction,
g) recovering the product of the reaction,
h) feeding in the rinsing liquid and rinsing the looped circuit (100),
i) depending on the result obtained in the step f), some of the operations a) to f) are repeated.

11. Process according to Claim 10, characterized in that, between the steps b) and g), the steps c) to d) are repeated at least once.

12. Process according to either of Claims 10 and 11, characterized in that the parameters of the chemical reaction are adjusted in accordance with the information provided by the means (41) for monitoring the progress of the reaction in the step f).

13. Process according to Claim 12, characterized in that the period of heating of the product in the reaction chamber (2) is increased by establishing a recirculation of the product in the looped circuit (100) after each injection of reactant, and by shunting the cooler (26, 28) by circulating the product through the shunt (43).

14. Process according to Claim 12, characterized in that the period of heating of the product in the reaction chamber (2) is increased or decreased by varying the output of the pump (27).

## Patentansprüche

1. Einrichtung zum Durchführen einer naßchemischen Reaktion, insbesondere an einer Reihe von Proben, wobei ein Heizen durch Mikrowellen benutzt wird, welche eine Reaktionskammer (2), die in einem Aufgabehohlraum (3) für Mikrowellen angeordnet ist, aufweist, wobei die Anordnung in einer aus einer Schleife bestehenden Schaltung (100) angeordnet ist, die selbst mit Einrichtungen (4, 5₁, 5₂, 5₃) für die Einführung von Reagenzien und/oder Proben und mit Einrichtungen (6) für die Zuführung von Spülflüssigkeit ausgestattet ist, wobei die aus einer Schleife bestehende Schaltung (100) stromabwärts der Reaktionskammer (2) einen Kühler (26, 28), eine Abzweigung (43), die zwischen den Eingang und den Ausgang des Kühlers (26, 28) geschaltet ist, und Steuereinrichtungen (41) für das Fortschreiten der chemischen Reaktion, die stromabwärts des Kühlers (26, 28) angeordnet sind, aufweist, wobei die aus einer Schleife bestehende Schaltung (100) weiterhin ein Expansionsgefäß aufweist, das aus einem Behälter (16) gebildet ist, der mit einer dichten Abdeckung (35) ausgestattet ist und mit einer Entlüftung (36) und einer Leitung (7) zur Abnahme von Reaktionsprodukt versehen ist.

2. Einrichtung nach Anspruch 1, dadurch gekennzeichnet, daß die Abzweigung (43) an jedem ihrer Enden ein Ventil (44, 45) aufweist, die es erlauben, sie von der aus einer Schleife bestehenden Schaltung (100) abzutrennen, wobei das Öffnen und das Schließen der Ventile (44, 45) ansprechend auf Informationen steuerbar ist, die von der Steuereinrichtung (41) für das Fortschreiten der chemischen Reaktion ausgegeben werden.

3. Einrichtung nach einem der Ansprüche 1 oder 2, dadurch gekennzeichnet, daß die Einrichtungen zum Einführen der Reagenzien und/oder Proben eine Zufuhrleitung (4) für Proben, wenigstens eine Leitung (5₁) für die Einführung wenigstens eines Reagenzes aufweisen, daß die Einrichtungen für die Zufuhr von Spülflüssigkeit durch eine Zufuhrleitung (6) für Spülflüssigkeit gebildet sein, wobei jede Leitung (4, 5₁, 6) über ein Ventil (8, 9₁, 10) an die aus einer Schleife bestehende Schaltung (100) angeschlossen ist, welche es erlauben, sie von der aus einer Schleife bestehenden Schaltung (100) abzutrennen und daß Steuereinrichtungen für das Öffnen und das Schließen der Ventile (8, 9₁, 10) vorgesehen sind.

4. Einrichtung nach Anspruch 3, dadurch gekennzeichnet, daß das Öffnen und das Schließen des Ventils (9₁), das die Leitung (5₁) für die Einführung wenigstens eines Reagenzes von der aus einer Schleife bestehenden Schaltung (100) abtrennt, ansprechend auf Informationen steuerbar ist, die durch die Steuereinrichtung (41) für das Fortschreiten der Reaktion gegeben werden.

5. Einrichtung nach einem der Ansprüche 1 bis 4, dadurch gekennzeichnet, daß sie eine Pumpe (27) aufweist, welche mindestens zwei Kolben (48, 49), die einander gegenüberstehend angeordnet sind, versetzt durch eine Kurvenscheibe (52), welche sich um eine Achse (55) senkrecht zu der Achse der Verlagerung der Kolben (48, 49) dreht, und Rückstelleinrichtungen (53, 54), die jedem Kolben (48, 49) zugeordnet sind, umfaßt.

6. Einrichtung nach einem der Ansprüche 1 bis 5, dadurch gekennzeichnet, daß der Behälter (16) des Expansionsgefäßes mit einem Überlauf (17) versehen ist, welcher ein Ventil (18) trägt und eine Einstelleinrichtung für das Probenvolumen bildet.

7. Einrichtung nach einem der Ansprüche 1 bis 6, dadurch gekennzeichnet, daß die Entlüftung, die auf dem Behälter (16) des Expansionsgefäßes vorgesehen ist, mit einem Wiedergewinnungsgerät für Gase, die in der chemischen Reaktion erzeugt worden sind, verbunden ist.

8. Einrichtung nach einem der Ansprüche 1 bis 7, dadurch gekennzeichnet, daß die Steuereinrichtungen (41) eine Meßsonde aufweisen, die mitten im Reaktionsprodukt angeordnet ist und die Leitfähigkeit desselben messen kann.

9. Einrichtung nach einem der Ansprüche 1 bis 7, dadurch gekennzeichnet, daß die Steuereinrichtungen (41) die optische Dichte oder Färbung des Reaktionsproduktes messen können, die in einem Bereich der aus einer Schleife bestehenden Schaltung (100) laufen, der aus einem lichtdurchlässigen Material gebildet ist.

10. Verfahren zur Verwendung der Einrichtung nach einem der Ansprüche 1 bis 9, dadurch gekennzeichnet, daß es die Stufen aufweist, die daraus bestehen:
a) Zuführen einer vorbestimmten Probenmenge in die aus einer Schleife bestehenden Schaltung (100),
b) Umlaufenlassen der Probe in der aus einer Schleife bestehenden Schaltung (100),
c) Einführen wenigstens eines Reagenzes in die aus einer Schleife bestehenden Schaltung (100),
d) Heizen der Reaktionskammer (2) durch Aufgabe von Mikrowellen über eine vorbestimmte Zeit,
e) Kühlen des Reaktionsproduktes,
f) Steuern des Fortschreitens der Reaktion,
g) Rückgewinnen des Reaktionsproduktes,
h) Zuführen von Spülflüssigkeit und Spülen der aus einer Schleife bestehenden Schaltung (100),
i) in Abhängigkeit von dem Ergebnis, das in der Stufe f) erhalten worden ist, wiederholt man bestimmte der Arbeitsgänge a) bis f).

11. Verfahren nach Anspruch 10, dadurch gekennzeichnet, daß man zwischen den Stufen b) und g) wenigstens einmal die Stufen c) und d) wiederholt.

12. Verfahren nach einem der Ansprüche 10 oder 11, dadurch gekennzeichnet, daß als Funktion der Informationen, die von der Steuervorrichtung (41) für das Fortschreiten der Reaktion in der Stufe f) geliefert werden, man die Parameter der chemischen Reaktion einstellt.

13. Verfahren nach Anspruch 12, dadurch gekennzeichnet, daß man die Heizdauer des Produktes in der Reaktionskammer (2) erhöht, indem man einen Neuumlauf des Produktes in der aus einer Schleife bestehenden Schaltung (100) nach jedem Einspritzen von Reagenz vornimmt und indem man den Kühler (26, 28) überbrückt, indem man das Produkt in der Abzweigung (43) umlaufen läßt.

14. Verfahren nach Anspruch 12, dadurch gekennzeichnet, daß man die Heizdauer des Produktes in der Reaktionskammer (2) erhöht oder erniedrigt, indem man den Durchsatz der Pumpe (27) ändert.
